# EUROPÄISCHE PATENTANMELDUNG

(11) **EP 4 513 104 A1**
(43) Veröffentlichungstag der Anmeldung: **26.02.2025**
(21) Anmeldenummer: 24192390.3
(22) Anmeldetag: 01.08.2024
(51) Int. Cl.: F24S 25/11, H02S 20/00

(54) **MOBILES MONTAGESYSTEM FÜR PHOTOVOLTAIKANLAGEN**

(30) Priorität: 16.08.2023 DE 202023104635 U
(71) Anmelder: Lauritzen, Jef Jaeger, 18196 Dummerstorf OT Scharstorf (DE)
(72) Erfinder: Lauritzen, Jef Jaeger, 18196 Dummerstorf OT Scharstorf (DE)
(74) Vertreter: Grünbaum, Annekathrin

(57) **Zusammenfassung**

Die Erfindung betrifft ein mobiles Montagesystem für Photovoltaikanlagen.

Es ist daher Aufgabe der Erfindung die Nachteile des Standes der Technik zu beseitigen und ein mobiles Montagesystem für Photovoltaikanlagen bereitzustellen, welches einen einfachen Transport, eine einfache Ausrichtung und eine unkomplizierte Montage von Photovoltaikanlagen ermöglicht, ohne dass hierfür eine Verankerung erforderlich ist.

Die Lösung dieser Aufgabe erfolgt durch die in den Ansprüchen aufgeführten Merkmale.

## Beschreibung

Die Erfindung betrifft ein mobiles Montagesystem für Photovoltaikanlagen.

Bestehende Photovoltaikanlagen verwenden in der Regel Zementpfeiler und Rinnenstahlträger zur Befestigung und Installation von Photovoltaikpaneelen, die im Wesentlichen aus Fundamentträgern, vorderen und hinteren Säulen, Hauptträgern und Nebenträgern bestehen. Die Photovoltaikpaneele werden direkt auf den Rinnenstahlträger installiert.

Allerdings ist die statische Sicherheit der Rinnenstahlträger gering und die Stabilität ist schlecht. Selbst bei einer qualifizierten Erstinstallation rostet die Stahlhalterung im Laufe der Zeit aufgrund von Umwelteinflüssen, und die Haltbarkeit ist schwach. Es ist demnach schwierig, die Anforderungen für einen sicheren Betrieb über 25 Jahre zu erfüllen, wobei der Stahlträger teuer ist, sich leicht verformt und regelmäßige Wartung und Reparaturen erfordert. Dies verursacht im Laufe der Nutzungsdauer hohe Folgekosten in Bezug auf notwendige Investitionen zur Instandhaltung.

Dem gegenüber sind Halterungen für Photovoltaikpaneele aus Beton bekannt, welche eine bessere Witterungsbeständigkeit und Haltbarkeit, und somit eine höhere Lebensdauer aufweisen.

So offenbart CN214177210U repräsentativ einen Zement-Photovoltaik-Träger, der mindestens zwei Trägerkörper und einen Zugstangenmechanismus umfasst, wobei jeder Trägerkörper eine rechtwinklige Trapezstruktur aufweist und durch Gießen von Beton gebildet wird. Jeweils zwei benachbarte Trägerkörper sind parallel und in Abständen angeordnet und die Trägerkörper sind mit Montageflächen versehen. Der Zugstangenmechanismus ist an den Montageflächen angeordnet.

CN213213375U offenbart einen vorgefertigten Betonträger, der in einer umgekehrten U-Form angeordnet ist, und zwei Betonfundamente umfasst. Der vorgefertigte Betonträger besteht aus einem Querträger, der für die Installation einer Photovoltaikanlage verwendet wird, und zwei Standsäulen, die jeweils mit den beiden Enden des Querträgers verbunden sind.

Nachteilig am Stand der Technik ist, dass bekannte Unterkonstruktionen für einen permanenten Einsatz der Photovoltaikanlage an einem Bestimmungsort vorgesehen sind, und massive, aufwendige und kostenintensive Elemente zur Bodenverankerung, beispielsweise Fundamente oder Gegengewichte, aufweisen.

Ferner führt dies zu einer dauerhaften Beeinträchtigung des Untergrundes, beispielsweise durch (Teil-)Versiegelung.

In diesem Sinne offenbart DE 203 18 915 U1 eine Anlage zur Gewinnung von Solarenergie an Hängen oder auf ebenen Freiflächen bestehend aus einer Konstruktion mit einem oder mehreren Solarmodulen, einem Trägerrahmen für die Module und einer Verankerung für den Trägerrahmen.

DE 20 2009 016 895 U1 offenbart eine Solarmodultragvorrichtung, die als Unterkonstruktion für Solarmodule insbesondere für Flachdächer dient.

EP 4 016 838 A1 offenbart eine Photovoltaikanlage mit Stützballasten, die die photovoltaischen Platten tragen. Um den Windwiderstand zu erhöhen und die Struktur des Systems zu versteifen, sind diese Ballaste durch einen Metallstab verbunden, an dem wiederum Betongewichte angebracht sind.

Nachteilig am hier benannten Stand der Technik ist, dass entsprechende Vorrichtungen eine schwere, vollflächige Bodenplatte aufweisen und/oder mehrteilig ausgebildet sind und/oder keine dedizierten Mittel zur Aufnahme durch eine Transportvorrichtung aufweisen. Sowohl der Transport, als auch eine für Photovoltaikanlagen wesentliche korrekte Ausrichtung auf engstem Raum (Mikroflächen), ist somit kompliziert und zeitaufwendig.

Es ist demnach wünschenswert über eine Unterkonstruktion zu verfügen, welche einen einfachen Transport, eine einfache Ausrichtung und eine unkomplizierte Montage von Photovoltaikanlagen ermöglicht, ohne dass hierfür eine Verankerung erforderlich ist.

### Darstellung der Erfindung

Es ist Aufgabe der Erfindung die Nachteile des Standes der Technik zu beseitigen und ein mobiles Montagesystem für Photovoltaikanlagen bereitzustellen, welches einen einfachen Transport, eine einfache Ausrichtung und eine unkomplizierte Montage von Photovoltaikanlagen ermöglicht, ohne dass hierfür eine feste Verankerung im Boden erforderlich ist.

Die Lösung dieser Aufgabe erfolgt durch die in den Ansprüchen aufgeführten Merkmale.

Die Lösung der Aufgabe erfolgt durch ein mobiles Montagesystem für Photovoltaikanlagen, wobei das mobile Montagesystem für Photovoltaikanlagen zumindest ein Unterkonstruktionsmodul aufweist. Das Unterkonstruktionsmodul weist zumindest zwei erste vertikale Aufnahmeelemente, zumindest zwei zweite vertikale Aufnahmeelemente, sowie zumindest zwei horizontale Verbindungselemente und zumindest zwei horizontale Transportelemente auf. Die ersten und die zweiten vertikalen Aufnahmeelemente sind zur Aufnahme zumindest eines Photovoltaikpaneels vorgesehen. Jeweils ein erstes und ein zweites vertikales Aufnahmeelement sind mittels eines der zumindest zwei horizontalen Verbindungselemente miteinander verbunden. Die zumindest zwei horizontalen Verbindungselemente sind mittels der zumindest zwei horizontalen Transportelemente miteinander verbunden, derart, dass alle der zumindest zwei ersten vertikalen Aufnahmeelemente auf einer Seite der zumindest zwei horizontalen Transportelemente angeordnet sind. Die zumindest zwei horizontalen Transportelemente weisen Mittel zur Aufnahme durch eine Transportvorrichtung auf.

Das erfindungsgemäße mobile Montagesystem für Photovoltaikanlagen dient im Speziellen einer Montage von PV-Anlagen auf ebenerdigen Flächen, kann aber auch für geneigte Flächen adaptiert werden.

In Vorteilhafter Ausführung weisen die zumindest zwei ersten vertikalen Aufnahmeelemente und die zumindest zwei zweiten vertikalen Aufnahmeelemente eine unterschiedliche Höhe auf.

Entsprechend einer bevorzugten Ausführungsform sind die zumindest zwei ersten vertikalen Aufnahmeelemente und die zumindest zwei zweiten vertikalen Aufnahmeelemente an ihrer Oberseite in einem Winkel abgeschrägt ausgebildet, derart, dass Schnittflächen miteinander verbundener vertikaler Aufnahmeelemente in einer geraden Fluchtlinie angeordnet sind. Der Winkel entspricht einem Neigungswinkel des Photovoltaikpaneels.

Eine Ausführung der zumindest zwei ersten vertikalen Aufnahmeelemente und der zumindest zwei zweiten vertikalen Aufnahmeelemente in unterschiedlicher Höhe in Kombination mit einer abgeschrägten Oberseite ermöglicht es, das Photovoltaikpaneel in einem beliebigen Neigungswinkel zu montieren. Der optimale Neigungswinkel des Photovoltaikpaneels ist dabei primär abhängig von einem avisierten Nutzungsort des mobilen Montagesystems für Photovoltaikanlagen, im Speziellen dessen Breiten- und Längengrad. Hierbei führt ein größerer Höhenunterschied zwischen den zumindest zwei ersten vertikalen Aufnahmeelementen und den zumindest zwei zweiten vertikalen Aufnahmeelementen zu einem größeren Neigungswinkel. Der Neigungswinkel kann zwischen 0°(horizontale Ausrichtung des Photovoltaikpaneels) und 89°einnehmen, liegt aber vorzugsweise zwischen 0° und 40°.

In einer Ausführungsformen weisen die zumindest zwei ersten vertikalen Aufnahmeelemente und/oder die zumindest zwei zweiten vertikalen Aufnahmeelemente und/oder die zumindest zwei horizontalen Verbindungselemente und/oder die zumindest zwei horizontalen Transportelemente einen rechteckigen Querschnitt auf.

Ein rechteckiger Querschnitt ermöglicht eine unkomplizierte Fertigung der Elemente, einzeln oder in einem Guss, indem eine entsprechende Gussform mittels einer einfachen Schalung hergestellt werden kann. In Bezug auf die zumindest zwei horizontalen Verbindungselemente und/oder die zumindest zwei horizontalen Transportelemente, welche beide vorzugsweise am Boden angeordnet sind, liefert ein rechteckiger Querschnitt dem mobilen Montagesystem für Photovoltaikanlagen Stabilität und eine verteilte Lastabtragung, indem eine den Boden kontaktierende Auflagefläche vergrößert wird.

Gemäß einer weiteren Ausführungsform weisen die zumindest zwei ersten vertikalen Aufnahmeelemente und/oder die zumindest zwei zweiten vertikalen Aufnahmeelemente und/oder die zumindest zwei horizontalen Verbindungselemente und/oder die zumindest zwei horizontalen Transportelemente Beton auf.

Beton bietet als Werkstoff entscheidende Vorteile. Durch den Einsatz von Beton als Hauptmaterial weist die Unterkonstruktion eine außergewöhnliche Langlebigkeit und Widerstandsfähigkeit auf. Sie ist unempfindlich gegenüber Witterungseinflüssen wie Korrosion und damit verbundenem Rost und/oder Materialermüdung, was eine langfristige und zuverlässige Nutzung gewährleistet.

Im Vergleich zu Stahl- und Aluminiumkonstruktionen erfordert das erfindungsgemäße mobile Montagesystem für Photovoltaikanlagen deutlich geringere Wartungsmaßnahmen. Beton ist ein robustes und wartungsarmes Material, das langfristig Kosten einspart und Betriebskosten der Photovoltaikanlage reduziert.

Beton weist eine ausgezeichnete Wärmeableitung auf, was sich positiv auf Leistung und Effizienz der Photovoltaikpaneele auswirkt. Im Vergleich zu Stahl- und Aluminiumkonstruktionen kann das erfindungsgemäße mobile Montagesystem für Photovoltaikanlagen eine effektivere Kühlung der Paneele ermöglichen, was zu einer höheren Energieerzeugung führt.

Der Einsatz von Beton als Hauptmaterial bietet ökologische Vorteile gegenüber Stahl- und Aluminiumkonstruktionen. Beton ist ein nachhaltiger Werkstoff, der aus natürlichen Ressourcen hergestellt wird und eine deutlich geringere CO₂-Bilanz aufweist. Darüber hinaus wird ein speziell entwickelter Beton verwendet, der durch seinen Herstellungsprozess bereits von Anfang an einen geringeren CO₂-Verbrauch aufweist. Dies trägt zur Reduzierung von Treibhausgasemissionen und zur Förderung einer umweltfreundlichen Energieerzeugung bei.

Eine Verwendung von Stahlbeton ist denkbar. Ferner denkbar ist die Ausführung eines oder mehrerer Elemente als Betonhohlkörper, beispielsweise um eine Kabelführung zu ermöglichen.

Gemäß verschiedener Ausführungsformen weisen die Mittel zur Aufnahme der zumindest zwei horizontalen Transportelemente Ösen und/oder Kanäle und/oder Ausbuchtungen auf.

Gemäß verschiedener Ausführungsformen sind die Ösen aus Metall.

Gemäß verschiedener Ausführungsformen ist die Transportvorrichtung ein Flurförderfahrzeug.

Die Mittel zur Aufnahme der zumindest zwei horizontalen Transportelemente dienen einem Transport des erfindungsgemäßen mobilen Montagesystems für Photovoltaikanlagen, beispielswiese von einem Produktionsort zu einem Nutzungsort oder von einem Nutzungsort zu einem Nutzungsort oder von einem Nutzungsort zu einem anderen Nutzungsort. Unterschiedlichste Ausführungsformen der Mittel zur Aufnahme sind denkbar. Beispielsweise können die zumindest zwei horizontalen Transportelemente an ihren Oberseiten Ösen aufweisen, welche aus Metall sein können. Diese können einem Flurförderförderfahrzeug, beispielsweise einem Hubwagen oder Stapler, dazu dienen, das erfindungsgemäße mobile Montagesystem für Photovoltaikanlagen aufzunehmen und zu transportieren. Die Mittel zur Aufnahme können aber auch Kanäle beinhalten, welche die zumindest zwei horizontalen Transportelemente horizontal durchdringen, und dafür ausgebildet sind, eine Aufnahme des mobilen Montagesystems für Photovoltaikanlagen durch ein Flurförderfahrzeug zu ermöglichen. Alternativ zu Kanälen sind Ausbuchtungen an den Unterseiten der zumindest zwei horizontalen Transportelemente denkbar. Ferner denkbar sind weitere Mittel zur Aufnahme, welche es ermöglichen, das mobile Montagesystem für Photovoltaikanlagen zu transportieren. Hierbei kann das mobile Montagesystem als solches, aber auch, und das ist besonders vorteilhaft, bereits mit Photovoltaiksystemen bestückt, problemlos transportiert und/oder ausgerichtet werden, auch mikroflächig auf engstem Raum. Hierbei sind die Photovoltaiksysteme nach dem Transport in kürzester Zeit wieder einsatzbar, sodass das mobile Montagesystem einen kosteneffizienten Betrieb gewährleistet.

Das erfindungsgemäße mobile Montagesystem für Photovoltaikanlagen wurde für eine schnelle und einfache Montage von Photovoltaikanlagen entwickelt. Durch den Einsatz von vorgefertigten Betonmodulen wird eine unkomplizierte und zeiteffiziente Installation gewährleistet. Eine Installation einer Leistung von 6 kW erfolgt in weniger als einer Stunde.

Ein weiterer Vorteil des erfindungsgemäßen mobilen Montagesystems für Photovoltaikanlagen ist die Möglichkeit der flexiblen Ausrichtung nach den Himmelsrichtungen. Dies erlaubt es, die Anlage vorzugsweise nach Süden auszurichten, um die maximale Sonneneinstrahlung zu nutzen. Durch die modularen und leicht transportierbaren Unterkonstruktionen kann die Photovoltaikanlage bei Bedarf einfach neu positioniert werden, auch in Interaktion mit anderen Strukturen auf der Nutzfläche oder je nach Jahreszeit, um die optimale Ausrichtung zur Sonne sicherzustellen. Diese Flexibilität ermöglicht es, die Energieerzeugung zu maximieren und den Standortanforderungen bestmöglich gerecht zu werden.

Im Gegensatz zu herkömmlichen Systemen erfordert das erfindungsgemäße mobile Montagesystem für Photovoltaikanlagen keine aufwendigen und kostenintensiven Bodenverankerungen. Durch das Design des mobilen Montagesystems für Photovoltaikanlagen und die Verwendung spezieller Befestigungselemente wird eine sichere und stabile Befestigung der Photovoltaikpaneele ermöglicht, ohne den Untergrund dauerhaft zu beeinträchtigen.

Im Unterschied zu traditionellen Installationen erfordert das erfindungsgemäße mobile Montagesystem für Photovoltaikanlagen keinerlei umfangreiche und/oder langanhaltende Bodenverankerungen. Dies erweist sich besonders vorteilhaft auf Flächen, die dauerhaft unberührt bleiben sollen, beispielsweise verseuchte oder sensibel genutzte Bodenbereiche. Das mobile Montagesystem für Photovoltaikanlagen lässt sich mühelos positionieren und bei Bedarf rückstandslos entfernen, ohne bleibende Spuren zu hinterlassen oder den Boden zu beeinträchtigen.

Dadurch ist das mobile Montagesystem für Photovoltaikanlagen ebenso flexibel bei der Installation, aber auch nachgelagert kann es problemlos an anderen Bestimmungsorten errichtet werden. Nach einem Transport ist es sofort einsatzbereit.

Das mobile Montagesystem für Photovoltaikanlagen präsentiert eine erweiterbare Funktionalität, die es erlaubt, temporäre Photovoltaikanlagen zu installieren. Dies erweist sich als äußerst praktisch, wenn eine gegebene Fläche temporär genutzt werden soll, während auf behördliche Erlaubnis für dauerhafte Installation gewartet wird, oder definitive Nutzungsrichtlinien noch ausstehen. Diese anpassungsfähige Eigenschaft gestattet eine unverzügliche Nutzung erneuerbarer Energie an Standorten, wo sie dringend benötigt wird, und umgeht dabei einen langwierigen, bürokratischen Prozess einer Genehmigungseinholung, bzw. gestattet eine entsprechende Nutzbarmachung der Fläche während dieses Prozesses. Mietlösungen bieten zudem eine Möglichkeit einer temporären Zwischennutzung von Flächen während gleichzeitig eine Energieeffizienz gesteigert werden kann, wodurch eine Energiewende selbst auf kurzzeitig nutzbaren Flächen vorangetrieben werden kann.

Das Design ermöglicht eine einfache Nutzung, einen schnellen Anschluss und einen unkomplizierten Transport, wodurch die Implementierung des Systems erleichtert wird. Diese Eigenschaften machen das System ideal für Mietlösungen, die die Eintrittshürde für die Nutzung von erneuerbaren Energien senken. Mietlösungen reduzieren die Anfangsinvestitionen und machen die Nutzung von Photovoltaikanlagen attraktiver und zugänglicher für eine breitere Zielgruppe. Durch die Bereitstellung von Mietlösungen können die Kosten für den Nutzer gesenkt und die Nutzung erneuerbarer Energien weiter forciert werden.

Darüber hinaus kann das mobile Montagesystem für Photovoltaikanlagen als autarke Inselanlage betrieben werden. In Kombination mit den transportablen Batteriesystemen gewährleistet das System eine zuverlässige und kontinuierliche Stromversorgung, auch an abgelegenen Standorten ohne Netzanschluss. Diese Inselbetriebsfähigkeit macht das System besonders geeignet für temporäre Einsätze auf Baustellen, bei Veranstaltungen oder in Notfallsituationen, wo kein Zugang zum öffentlichen Stromnetz besteht.

Eine erweiterte Funktionalität ergibt sich insbesondere mit einer kombinierten Nutzung transportabler Batteriesysteme. Derartige transportable Batteriesysteme können beispielsweise zur temporären Stromversorgung einer elektrisch anderweitig nicht erschlossenen Baustelle dienen. Ferner können derartige transportable Batteriesysteme zur Stromversorgung innerstädtischer Baustellen dienen, welche konventionell beispielsweise mittels lauter und luftverschmutzender Dieselgeneratoren bewerkstelligt wird. Hierbei kann mittels des mobilen Montagesystems für Photovoltaikanlagen in Baustellennähe (bzw. in der Nähe anderer Einsatzorte) temporär Ladeinfrastruktur zur Ladung der transportablen Batteriesysteme geschaffen werden, um eine entsprechende Baustelle (bzw. einen anderen Verbraucher) effizient mit sauberem, regenerativem Strom zu versorgen, ohne dass es hierfür einen permanenten Netzanschluss bedarf. Größere Solarparks kommen als Ladeinfrastruktur in der Regel nicht in Betracht, da diese sich im Regelfall auf Freiflächen (weit) außerhalb urbaner Infrastruktur befinden, sodass ein Pendeln zum Wechsel geladener und entladener transportabler Batteriesystem unökonomisch und unökologisch ist. Das erfindungsgemäße mobile Montagesystem vergrößert somit den Einsatzbereich von Photovoltaikanlagen und transportablen Batteriesystem gleichermaßen.

Die Möglichkeit der temporären Installation mindert langfristige Kosten, welche mit dauerhaften Montagesystemen einhergehen. Das mobile Montagesystem für Photovoltaikanlagen präsentiert eine wirtschaftliche Alternativlösung für den kurzfristigen Strombedarf bei Veranstaltungen, zeitlich begrenzten Baustellen oder anderen Projektanforderungen, indem sie eine Energiegewinnung auf temporär nutzbaren Flächen unterstützt und somit zur Förderung der Energiewende beiträgt.

Das mobile Montagesystem für Photovoltaikanlagen leistet einen umfangreichen Beitrag zur Erreichung der Energiewende und fördert die verstärkte Nutzung erneuerbarer Energien. Durch die hohe Effizienz der Photovoltaikpaneele und die optimale Ausrichtung der Anlage wird eine maximale Energieerzeugung gewährleistet, um den Bedarf an konventioneller Stromerzeugung zu reduzieren.

Das mobile Montagesystem für Photovoltaikanlagen ist mit allen gängigen Photovoltaikpaneelen kompatibel. Dank des modularen Aufbaus und der individuell einstellbaren Montagepunkte können verschiedene Photovoltaikpaneele nahtlos integriert werden, um den spezifischen Anforderungen der Kunden gerecht zu werden.

Da es sich um ein mobiles System handelt, das leicht transportiert und an verschiedenen Standorten wieder aufgebaut werden kann, ist es für Banken und Finanzinstitute attraktiver. Die Möglichkeit, das System flexibel einzusetzen und bei Bedarf zu versetzen, reduziert das finanzielle Risiko und erhöht die Bereitschaft der Banken, Finanzierungen zu gewähren. Dies erleichtert es den Nutzern, Investitionen in erneuerbare Energien zu tätigen und die Vorteile des Systems zu nutzen.

### Ausführung der Erfindung

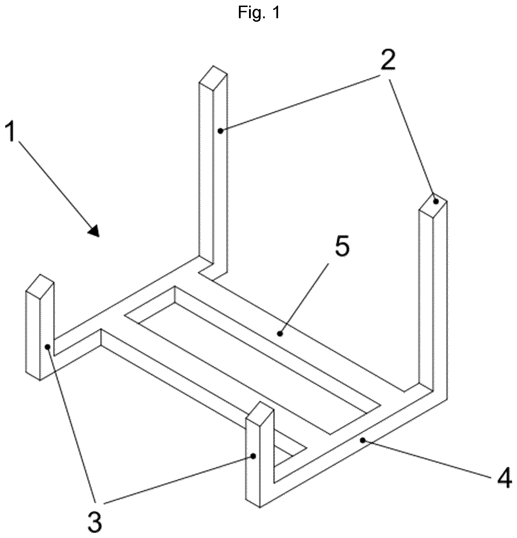

Die Erfindung wird anhand eines/mehrerer Ausführungsbeispiels näher erläutert. Hierzu zeigt
- Figur 1: das Unterkonstruktionsmodul.

In der Beschreibung wird auf die beigefügten Zeichnungen Bezug genommen, in denen zur Veranschaulichung spezifische Ausführungsformen gezeigt sind, in denen die erfindungsgemäße Anordnung ausgeübt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

Der erfindungsgemäße mobile Montagesystem für Photovoltaikanlagen ist in Figur 1 dargestellt. Das mobile Montagesystem für Photovoltaikanlagen weist zumindest ein Unterkonstruktionsmodul (1) auf. Das Unterkonstruktionsmodul (1) weist zumindest zwei erste vertikale Aufnahmeelemente (2), zumindest zwei zweite vertikale Aufnahmeelemente (3), sowie zumindest zwei horizontale Verbindungselemente (4) und zumindest zwei horizontale Transportelemente (5) auf. Die ersten (2) und die zweiten vertikalen Aufnahmeelemente (3) sind zur Aufnahme zumindest eines Photovoltaikpaneels vorgesehen. Jeweils ein erstes (2) und ein zweites vertikales Aufnahmeelement (3) sind mittels eines der zumindest zwei horizontalen Verbindungselemente (4) miteinander verbunden. Die zumindest zwei horizontalen Verbindungselemente (4) sind mittels der zumindest zwei horizontalen Transportelemente (5) miteinander verbunden, derart, dass alle der zumindest zwei ersten vertikalen Aufnahmeelemente (2) auf einer Seite der zumindest zwei horizontalen Transportelemente (5) angeordnet sind. Die zumindest zwei horizontalen Transportelemente (5) weisen Mittel zur Aufnahme durch eine Transportvorrichtung auf.

Das erfindungsgemäße mobile Montagesystem für Photovoltaikanlagen kann gemäß Figur 1 exakt zwei erste vertikale Aufnahmeelemente (2), zwei zweite vertikale Aufnahmeelemente (3), zwei horizontale Verbindungselemente (4) und zwei horizontale Transportelemente (5) aufweisen. Eine andere Anzahl dieser Elemente ist jedoch denkbar, und abhängig von einer Dimensionierung des Unterkonstruktionsmoduls (1).

In Vorteilhafter Ausführung, und wie in Figur 1 dargestellt, weisen die zumindest zwei ersten vertikalen Aufnahmeelemente (2) und die zumindest zwei zweiten vertikalen Aufnahmeelemente (3) eine unterschiedliche Höhe auf, wobei gemäß Figur 1 die zumindest zwei ersten vertikalen Aufnahmeelemente (2) höher sind, als die zumindest zwei zweiten vertikalen Aufnahmeelemente (3).

Die zumindest zwei ersten vertikalen Aufnahmeelemente (2) und die zumindest zwei zweiten vertikalen Aufnahmeelemente (3) können an ihrer Oberseite in einem Winkel abgeschrägt ausgebildet sein, derart, dass Schnittflächen miteinander verbundener vertikaler Aufnahmeelemente in einer geraden Fluchtlinie angeordnet sind. Dies ist in Figur 1 dargestellt. Der Winkel entspricht hierbei einem Neigungswinkel des Photovoltaikpaneels, nachdem es auf die entsprechenden Aufnahmeelemente (2,3) montiert wurde.

In einer Ausführungsformen und wie in Figur 1 dargestellt, weisen die zumindest zwei ersten vertikalen Aufnahmeelemente (2) und/oder die zumindest zwei zweiten vertikalen Aufnahmeelemente (3) und/oder die zumindest zwei horizontalen Verbindungselemente (4) und/oder die zumindest zwei horizontalen Transportelemente (5) einen rechteckigen Querschnitt auf, wobei eines oder alle der Elemente Beton aufweisen können.

Gemäß verschiedener Ausführungsformen weisen die Mittel zur Aufnahme der zumindest zwei horizontalen Transportelemente (5) Ösen und/oder Kanäle und/oder Ausbuchtungen auf (hier nicht gezeigt), welche Metall aufweisen können und zur Aufnahme des mobilen Montagesystems für Photovoltaikanlagen durch ein Flurförderfahrzeug vorgesehen sind.

### Bezugszeichen

- **1**: Unterkonstrktionsmodul
- **2**: erste vertikale Aufnahmeelemente
- **3**: zweite vertikale Aufnahmeelemente
- **4**: horizontale Verbindungselemente
- **5**: horizontale Transportelemente

## Patentansprüche

1. Mobiles Montagesystem für Photovoltaikanlagen, aufweisend zumindest ein Unterkonstruktionsmodul (1), welches folgende Komponenten aufweist:
zumindest zwei erste vertikale Aufnahmeelemente (2), zumindest zwei zweite vertikale Aufnahmeelemente (3), sowie zumindest zwei horizontale Verbindungselemente (4) und zumindest zwei horizontale Transportelemente (5), wobei
die ersten (2) und die zweiten vertikalen Aufnahmeelemente (3) zur Aufnahme zumindest eines Photovoltaikpaneels vorgesehen sind, wobei
jeweils ein erstes (2) und ein zweites vertikales Aufnahmeelement (3) mittels eines der zumindest zwei horizontalen Verbindungselemente (4) miteinander verbunden sind, wobei
die zumindest zwei horizontalen Verbindungselemente (4) mittels der zumindest zwei horizontalen Transportelemente (5) miteinander verbunden sind, wobei
die zumindest zwei horizontalen Transportelemente (5) Mittel zur Aufnahme durch eine Transportvorrichtung aufweisen.

2. Mobiles Montagesystem für Photovoltaikanlagen gemäß Anspruch 1, **dadurch gekennzeichnet, dass** die zumindest zwei ersten vertikalen Aufnahmeelemente (2) und die zumindest zwei zweiten vertikalen Aufnahmeelemente (3) eine unterschiedliche Höhe aufweisen.

3. Mobiles Montagesystem für Photovoltaikanlagen gemäß Anspruch 1 oder 2, **dadurch gekennzeichnet, dass** die zumindest zwei ersten vertikalen Aufnahmeelemente (2) und die zumindest zwei zweiten vertikalen Aufnahmeelemente (3) an ihrer Oberseite in einem Winkel abgeschrägt ausgebildet sind, derart, dass Schnittflächen miteinander verbundener vertikaler Aufnahmeelemente (2,3) in einer geraden Fluchtlinie angeordnet sind, wobei der Winkel einem Neigungswinkel des Photovoltaikpaneels entspricht.

4. Mobiles Montagesystem für Photovoltaikanlagen gemäß einem der vorhergehenden Ansprüche, **dadurch gekennzeichnet, dass** die zumindest zwei ersten vertikalen Aufnahmeelemente (2) und/oder die zumindest zwei zweiten vertikalen Aufnahmeelemente (3) und/oder die zumindest zwei horizontalen Verbindungselemente (4) und/oder die zumindest zwei horizontalen Transportelemente (5) einen rechteckigen Querschnitt aufweisen.

5. Mobiles Montagesystem für Photovoltaikanlagen gemäß einem der vorhergehenden Ansprüche, **dadurch gekennzeichnet, dass** die zumindest zwei ersten vertikalen Aufnahmeelemente (2) und/oder die zumindest zwei zweiten vertikalen Aufnahmeelemente (3) und/oder die zumindest zwei horizontalen Verbindungselemente (4) und/oder die zumindest zwei horizontalen Transportelemente (5) Beton aufweisen.

6. Mobiles Montagesystem für Photovoltaikanlagen gemäß einem der vorhergehenden Ansprüche, **dadurch gekennzeichnet, dass** die Mittel zur Aufnahme der zumindest zwei horizontalen Transportelemente (5) Ösen und/oder Kanäle und/oder Ausbuchtungen aufweisen.

7. Mobiles Montagesystem für Photovoltaikanlagen gemäß Anspruch 6, **dadurch gekennzeichnet, dass** die Ösen aus Metall sind.

8. Mobiles Montagesystem für Photovoltaikanlagen gemäß einem der vorhergehenden Ansprüche, **dadurch gekennzeichnet, dass** die Transportvorrichtung ein Flurförderfahrzeug ist.

9. Mobiles Montagesystem für Photovoltaikanlagen gemäß einem der vorhergehenden Ansprüche, **dadurch gekennzeichnet, dass** die zumindest zwei horizontalen Verbindungselemente (4) mittels der zumindest zwei horizontalen Transportelemente (5) derart miteinander verbunden sind, dass alle der zumindest zwei ersten vertikalen Aufnahmeelemente (2) auf einer Seite der zumindest zwei horizontalen Transportelemente (5) angeordnet sind.
